# EUROPEAN PATENT APPLICATION

(11) **EP 1 927 977 A2**
(43) Date of publication of application: **04.06.2008**
(21) Application number: 07000914.7
(22) Date of filing: 17.01.2007
(51) Int. Cl.: G09G 5/10

(54) **Method, device and system for adjusting the display characteristic of a video frame according to its luminance statistics**

(30) Priority: 29.11.2006 US 564302
(71) Applicant: MediaTek Inc., 1st Science-Based Industrial Park Hsin-Chu 300 (TW)
(72) Inventor: Hsuan, Chih-Lin, Taipei City (TW)
(74) Representative: Schaeberle, Steffen

(57) **Abstract**

A method, a device and a system for adjusting the display characteristic of a video frame according to luminance statistics (a histogram) corresponding to pixels in the video frame is disclosed. The method includes identifying a first target value (210) and a second target value (220) in the histogram, dividing the histogram into segments (230), and then separately adjusting the display characteristics of the pixels according to the segment of the histogram they correspond to (240).

## Description

The present disclosure relates to methods and related devices for dynamically adjusting display characteristic (e.g., contrast) of a video frame according to the pre-characterizing clauses of claims 1, 18, and 24.

While processing video sequences, in which the video sequence comprises a series of video frames, it is possible to use a histogram to illustrate the brightness distribution for each video frame. Based on the histograms, the contrast may be enhanced by normalizing the histogram in order to expand the brightness distribution to full scale. This process is well known to those of average skill in the art and therefore additional explanatory details are omitted for the sake of brevity. Said histogram normalization process is capable of enhancing contrast and brightness of the video frame. Many methods are well documented in the prior art. Any such method is equally valid as an example herein.

However, conventional methods for contrast and brightness enhancements of the video frame are less than simple, and in fact, these complex algorithms utilized for traditional histogram normalization result in a very processor intensive task. In other words, the process requires significant computing power. In some cases, sufficient computer power is not available, therefore the traditional histogram normalization techniques are less than adequate.

This in mind, the present invention aims at providing a method and apparatus for adjusting the contrast of a video frame having a less complicated algorithm, and also aims at providing a more flexible method and user interface for adjusting the contrast of a video frame.

This is achieved by a method according to claim 1, an adjusting device according to claim 18, and a system according to claim 24. The respective dependent claims pertain to corresponding further developments and improvements.

As will be seen more clearly from the detailed description following below, the claimed method for adjusting display characteristic of a video frame according to luminance statistics comprises identifying a first target value and a second target value from the luminance statistics; and separately adjusting display of the pixels corresponding to the first target value and the second target value in the video frame.

In addition, the claimed adjusting device for adjusting display characteristic of a video frame according to luminance statistics comprises a video buffer, for receiving the video frame; an identifying unit, coupled to the video buffer, for identifying a first target value and a second target value from the luminance statistics; and an adjusting unit, coupled to the video buffer, for separately adjusting display of the pixels corresponding to the first target value and the second target value in the video frame.

Furthermore, the claimed system for adjusting display characteristic of a video frame according to luminance statistics comprises a display, showing the video frame; a dark region controller, operative to adjust luminance values of pixels corresponding to a first target value; and a bright region controller, operative to adjust luminance values of pixels corresponding to a second target value.

In the following, the invention is further illustrated by way of example, taking reference to the accompanying drawings. Thereof
Fig. 1 is a block diagram of an adjusting device according to an embodiment of the present disclosure,
Fig. 2 is a diagram illustrating an exemplary histogram processed by the adjusting device shown in Fig. 1,
Fig. 3 is a flowchart illustrating a method for adjusting contrast of a video frame according to luminance statistics corresponding to the video frame according to an embodiment of the present disclosure, and
Fig. 4 is a diagram illustrating a user interface for display characteristic adjustment according to an embodiment of the present invention.

Certain terms are used throughout the following description and claims to refer to particular system components. As one skilled in the art will appreciate, consumer electronic equipment manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ..." The terms "couple" and "couples" are intended to mean either an indirect or a direct electrical connection. Thus, if a first device couples to a second device, that connection may be through a direct electrical connection, or through an indirect electrical connection via other devices and connections.

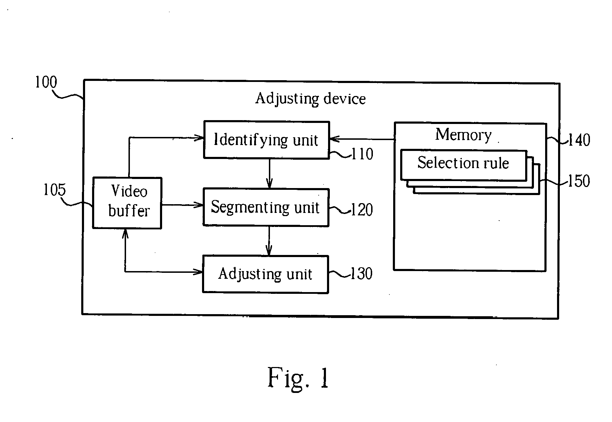

Please refer to Fig. 1. Fig. 1 is a block diagram of an adjusting device 100 according to an embodiment of the present disclosure. In this disclosure, the adjusting device 100 is utilized to adjust display characteristic of pixels in a video frame according to luminance statistics of these pixels. To illustrate features of the present invention, an exemplary embodiment of using the adjusting device 100 to adjust contrast/brightness of the pixels according to a luminance histogram of the video frame is disclosed hereinafter. However, this is not a limitation of the present invention. For example, the adjusting device 100 can be configured to adjust another display characteristic of the pixels, such as the chrominance characteristic (e.g. hue values, saturation values, RGB values). That is, the adjusting device 100 is configured to reference the luminance statistics to change the chrominance value of the pixels. This also falls in the scope of the present invention.

As shown in Fig. 1, the adjusting device 100 comprises the following components: a video buffer 105, a memory (storage unit) 140, an identifying unit 110, a segmenting unit 120, and an adjusting unit 130. The video buffer 105 is implemented to buffer incoming video frames of a video sequence. Luminance values of a video frame can be analyzed into a histogram. The memory 140 is used to store at least a predetermined selection rule 150. In this embodiment, the predetermined selection rule(s) 150 is programmable to meet different design requirements. The identifying unit 110 is coupled to the video buffer 105 and the memory 140, and is used to identify a first target value and a second target value from the histogram of a specific video frame buffered in the video buffer 105 by referencing the predetermined selection rule(s) 150. The segmenting unit 120 is coupled to the video buffer 105, and is used to divide the luminance values in the histogram of the specific video frame into a plurality of segments between the first target value and the second target value. The adjusting unit 130 is coupled to the video buffer 105, and is used to separately adjust a display characteristic such as the brightness of the pixels located in the said segments. As is well known to one having average skill in this art, it is not necessary for said components of the adjusting device 100 to be configured exactly as described herein. Certain said functionality of the said components are easily be divided amongst additional other components (not shown and not further mentioned herein) or can easily be combined into fewer components. For example, the adjusting device 100 may be realized by a processor running firmware codes. In fact, while several embodiments of the present invention are presented hereinafter, those of average skill in this art know that many modifications to the embodiments presented herein are possible and those modifications still obey the spirit of the present invention.

To further highlight elements of the present invention and completely and concisely describe and define these elements, please continue to refer to Fig. 1.

In an embodiment of the present invention, a method for adjusting a display characteristic of a video frame according to luminance statistics corresponding to the video frame is disclosed. In the present embodiment, the identifying unit 110 first identifies a first target value and a second target value from the luminance statistics. Further details regarding the identification unit 110's selection of the target values is offered later in this disclosure. Next, the segmenting unit 120 sorts the luminance values of the video frame into a plurality of segments between the first target value and the second target value. Finally, the adjusting unit 130 separately adjusts the display characteristic such as luminance and/or chrominance of the pixels located in the segments.

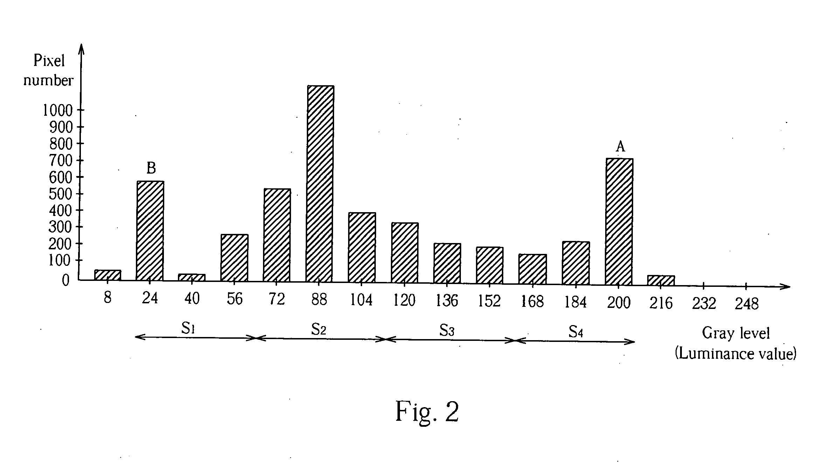

Fig. 2 is a diagram illustrating an exemplary luminance histogram corresponding to a video frame. The horizontal axis represents the gray level (luminance value), and the vertical axis represents the pixel number. As shown in Fig. 2, the identifying unit 110 selects the gray level equal to 200 as the first target value A and the gray level equal to 24 as the second target value B. The segmenting unit 120 determines segments S₁, S₂, S₃, S₄ between the first target value A and the second target value B. The adjusting unit 130 separately raising or lowering the value representing the display characteristic (for example the luminance values) of pixels belonging to the luminance range defined by a corresponding segment S₁, S₂, S₃, S₄. For example, lowering the luminance value belonging to segments S₁ and S₂ whiling raising the luminance value belong to segments S₃ and S₄. It should be noted that the selection of the first and second target values, the number of segments defined by different threshold values, the length of each segment, and the number of luminance range being adjusted are only for illustrative purposes, and are not meant to be limitations of the present invention.

In another embodiment, it is possible that the histogram remains as a single undivided segment, and the display characteristic of the pixels between the two target values is adjusted collectively. One of average skill in the art should recognize that in the embodiment with a single segment it would be possible to make a graph showing a linear relationship between the modified luma value (i.e., modified gray level) and the original luma values. Note that a graph with a slope = 1 represents the relationship before modification. A steep slope (slope > 1) indicates the contrast of the video frame can be enhanced after modification. An exemplary adjusting method for the luma value of the pixels can be described using the graph showing the relationship between the modified luma value and the original luma value. The luma values are modified so that the luma value of a bright point (e.g., the first target value) is raised by a certain amount and the luma value of a dark point (e.g., the second target value) is lowered by a certain amount, it is possible to draw a line that links the two modified points, and also lines for connecting the modified bright point and the maximum luma value, as well as the modified dark point and the minimum luma value. Modifying the luma value of the pixels based on the relationship shown by the graph will make relatively dark area even darker and relatively bright area even brighter. Alternatively, if reducing the contrast is the goal, then it is just as easy to decrease the slope by lowering the bright point and raising the dark point. For the sake of brevity, other possible combinations and utilizations are omitted herein.

The identifying unit 110 has many options for identifying the first target value and the second target value. Specifically, the process begins when the identifying unit 110 selects a specific luminance value from the statistics (e.g. the luminance histogram) as the first target value according to a predetermined selection rule and selects another specific luminance value as the second target value. The said predetermined rules offer the said options for identification of the target values. As one have average skill in this art knows, there are various predetermined rules that can be successfully applied to this aspect of the present invention. Herein, the following predetermined rules are disclosed, but this list is not intended to suggest that the present invention is limited in any by the predetermined rules that are selected. Additionally, the present invention is compatible with many other equally sufficient predetermined rules that are omitted herein for the sake of brevity. Predetermined rules disclosed herein for use by the identifying unit 110 include: First, selecting the specific luminance value according a predetermined percentile of the histogram. This in case the predetermined luminance value corresponds to a darkest point (i.e., the lowest value) on the video frame or the predetermined luminance value corresponds to a brightest point (i.e., the highest value) on the video frame. Another example is selecting the luminance value at the 10% tile as a dark value and the luminance value at the 95% tile as a bright value. A second predetermined rule disclosed herein for use by the identifying unit 110 is: sorting pixels of the video frame according to gray levels (for example from the lowest to the highest value) and then selecting a k^{th} pixel from the sorted pixels to be the specific luminance value.

It is possible to utilize the same predetermined selection rule for both the first and second target values. For example, pixels are sorted according to its luminance value, and the predetermined selection rules utilized can be selecting a k^{th} pixel from the sorted pixels to be the first target value and selecting a j^{th} pixel from the sorted pixels to be the second target value. In some other embodiments, it is possible to utilize a predetermined selection rule for the first target value that is a different predetermined selection rule than what is used for the second target value. For example, when selecting a first specific luminance value according to a first predetermined percentile of the histogram and when selecting a second specific luminance value according a k^{th} pixel of the pixels sorted with its luminance value, different predetermined selection rules are utilized.

In some embodiments, the segmenting unit 120 can classify the pixels in one of the four segments and the pixels belong to each segment can be adjusted according to a predetermined rules. The graph showing the relationship between the modified luminance value and the original luminance value is used again for ease of illustration. For example, the first target value in Fig. 2 is raised from 200 to 240 and the second target value is lowered from 24 to 16. The slopes for segment S₁ and S₄ are remained as 1, however, the slopes for segment S₂ and S₃ are increased. The slope for segment S₂ and S₃ can be the same or different in this case. The graph appears as an "S" shape and this can provide great flexibility when adjusting the brightness or contrast of a video frame. In another embodiment, the first and second target values are not raised or lowered, but the slopes for segments S₁ and S₄ are less than 1 and the slopes for segment S₂ and S₃ are greater than 1.
It is also possible to use an adaptive method wherein the identifying unit 110 can utilize one or more adaptive selection rules 150 stored in the memory 140. In this case, the relationship graph appears in various forms according to the adaptive method utilized by the segmenting unit 120 and the adaptive selection rule(s) used by the identifying unit 110, and in this way the present invention can provide great flexibility when adjusting the contrast of a video frame. Please note that by adaptive, the present invention can, for example, integrate a variable, for example, one or more variables related to the video frames, or anything else as deemed appropriate by a user or otherwise, and the outcome/result of the operations of the segmenting unit 120 and the identifying unit 110 adapt/change according to said variables and are even possibly dependent upon earlier adaptive results.

Finally, two additional options are offer hereafter as further examples of the identifying unit 110 identifying the first target value and the second target value. Specifically, the identifying unit 110 can utilize a first predetermined luminance and a second predetermined luminance from the statistics as the first target value and the second target value, wherein, the first predetermined luminance value corresponds to a darkest point (i.e., the lowest value) on the video frame, and the second predetermined luminance value corresponds to a brightest point (i.e., the highest value) on the video frame.

Related to this final example, please note, that in another embodiment, it is possible and fully supported by the present invention that the predetermined selection method for selecting at least one of a first target value or a second target value from the statistics corresponding to the current frame of the video image is different from the predetermined selection method for selecting at least one of a first target value or a second target value from the statistics corresponding a frame following the current frame of the video image.
It is also possible to use the luminance statistics of a current frame to derive an adjusting rule, and apply the adjusting rule to adjust the display characteristic such as the brightness, color, or contrast of the frame or frames following the current frame. For example, when the video is somewhat static, the adjusting rule derived from the luminance statistics of a video frame may be applicable for one or more subsequent video frame.

Please note, that any of the aforementioned embodiments can support within the scope of the present invention any combination of identifying the first target value and the second target value dynamically or setting the first target value and the second target value according to user commands or any combination of the two.

Please note, the number of segments, the segment size, the number odd versus even segments, the uniformity or non-uniformity of segment size, and the number of segments residing on the bright half of the luminance histogram versus the number of segments residing on the dark half of the luminance histogram are in no way limitations to the present invention. Specifically, there can be one single segment, two or more segments, the segments can have equal size, some can have equal size while other have unequal size, there can be an odd number of segments, there can be an even number of segments, and so on. These details of segmentation of the histogram are not limitations to the spirit of the present invention. On of average skill in this art, realizes that to achieve various results, perhaps a desired effect, it is advantageous to segment the histogram according to some specific predetermined rules but because the present invention is compatible with all said rules, said rules are not further described herein.

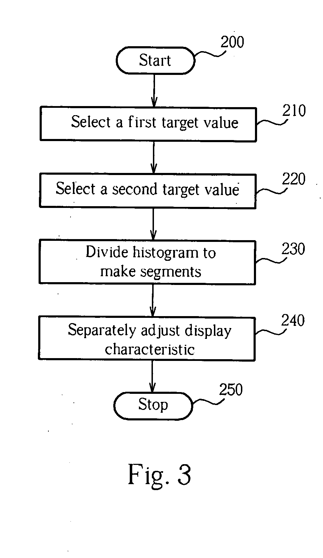

Fig. 3 is a flowchart illustrating a method for adjusting display characteristic of a video frame according to the luminance statistics of the video frame according to an embodiment of the present disclosure. The method comprises the following steps:
Step 200: acquiring pixels of a video frame;
Step 210: Select a first target value (e.g., the above-mentioned bright point A);
Step 220: Select a second target value (e.g., the above-mentioned dark point B);
Step 230: Divide pixels according to its luminance value into groups;
Step 240: Separately adjust the display characteristic.
Step 250: Stop.

In step 200, the chrominance value of pixels in a video frame is acquired. In step 210, a bright point (or a first target value) is selected. It is not necessary for a bright point to be selected according to a predetermined rule. The end-user can also make this selection, for example, utilizing on-screen controls or other user interface elements and devices. It is also within the scope of the present invention that the bright point is a default value, such as, for example, luma value = 200, or the maximum luma value of the video frame. This modification obeys the spirit of the present invention.

In step 220, a dark point (or a second target value) is selected. Similar to the bright point, it may be selected using various methods. In step 230, the pixels are divided into groups according to their luma values (or the histogram is divided in segments). As stated earlier, it is possible to have simply one segment. In step 240, the display characteristic (for example, luma value, saturation value, hue value) of the pixels in each segment is adjusted. The adjusting unit 130 does this for each segment separately. In other words, the way in which the adjusting unit 130 makes adjustments in one segment does not need to have relationship to how the adjusting unit 130 will adjust another different segment. In some embodiments, not all segments are adjusted, for example, the adjusting unit 130 only adjusts one of the segments to make the relatively bright area looks brighter.

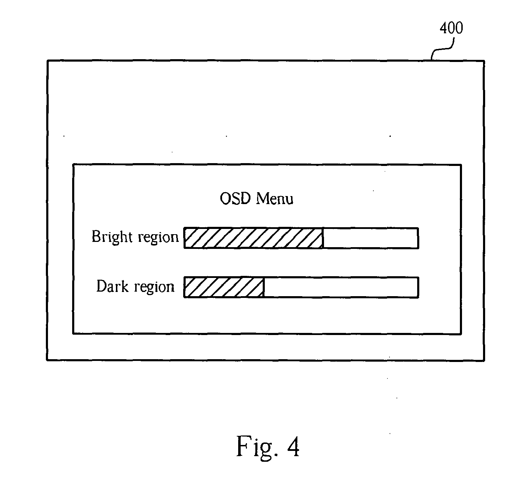

The adjusting device of this disclosure also allows the user to control the contrast/brightness adjustment via a user interface. Fig. 4 is a diagram illustrating a user interface for display characteristic adjustment according to an embodiment of the present invention. The user interface is shown on a display 400, this display 400 may be the one utilized for showing video frames stored in the video buffer 105 in Fig. 1. Assume that the segmenting unit 120 in the adjusting device 100 is configured to divide the histogram between the first and second target values identified by the identifying unit 110 into two segments, a dark region and a bright region. In this embodiment, an OSD menu is shown on the display 400 to serve as the desired user interface. As shown in Fig. 4, control options, such as a dark region controller and a bright region controller, are displayed for the user to enhance the contrast by separately lowering luminance values of pixels belonging to the dark region and raising luminance values of pixels belonging to the bright region. It is also possible to divide the histogram into more segments, and still be able to be controlled by the two control options as shown in Fig. 4, for example, dividing into four segments, where two segments correspond to the dark region and another two segments correspond to the bright region. The number of the control options on the user interface shall not be a limitation. The user interface shown in Fig. 4 therefore is only for illustrative purposes, and other user interface configurations are possible. For example, the user interface comprises a controller especially for users or engineers to tune the first and second target values, or in a case where the histogram between the first and second target values is divided into M segments, control options corresponding to the M segments are shown on the user interface to allow the user to separately and selectively tune the luminance values of pixels in each of the M segments. This still obeys the spirit of the present invention.

In summary, the present invention provides a method and device for adjusting the display characteristic of a video frame according to luminance statistics of the video frame. In contrast to the prior art using a single control value to tune the contrast or brightness of all pixels in the video frame, the present invention can achieve superior results due to an efficient and non-complex calculation that is implemented for said adjusting.

## Claims

1. A method for adjusting display characteristic of a video frame according to luminance statistics corresponding to a plurality of pixels in the video frame, the method **characterized by**:
identifying a first target value and a second target value from the luminance statistics; and
separately adjusting the display characteristic of the pixels corresponding to the first target value and the second target value in the video frame.

2. The method of claim 1, **characterized in that** the step of identifying the first target value and the second target value comprises
selecting a specific luminance value from the luminance statistics as the first target value according to a predetermined selection rule (150) and utilizing a predetermined luminance value as the second target value.

3. The method of claim 2, **characterized in that** the predetermined selection rule (150) is:
selecting the specific luminance value according a predetermined percentile of the luminance statistics.

4. The method of claim 3, **characterized in that** the predetermined luminance value corresponds to a lowest or a highest value in the luminance statistics.

5. The method of claim 2, **characterized in that** the predetermined selection rule (150) is:
sorting a plurality of pixels of the video frame according to their luminance values; and
selecting a k^{th} pixel from the sorted pixels and identifying its luminance value as the specific luminance value.

6. The method of claim 1, **characterized in that** the step of identifying the first target value and the second target value comprises selecting a first specific luminance value and a second specific luminance value from the luminance statistics as the first target value and the second target value according to a predetermined selection rule (150).

7. The method of claim 6, **characterized in that** the predetermined selection rule (150) comprises:
selecting the first specific luminance value according a first predetermined percentile of the luminance statistics; and
selecting the second specific luminance value according a second predetermined percentile of the luminance statistics.

8. The method of claim 6, **characterized in that** the predetermined selection rule (150) comprises:
sorting a plurality of pixels of the video frame according to their luminance values;
selecting a k^{th} pixel from the sorted pixels and identifying its luminance value as the first specific luminance value; and
selecting a j^{th} pixel from the sorted pixels and identifying its luminance value as the second specific luminance value.

9. The method of claim 1, **characterized in that** the step of identifying the first target value and the second target value comprises utilizing a first predetermined luminance value and a second predetermined luminance value as the first target value and the second target value.

10. The method of claim 9, **characterized in that** the first predetermined luminance value corresponds to a lowest value in the luminance statistics, and the second predetermined luminance value corresponds to a highest value in the luminance statistics.

11. The method of claim 1, **characterized in that** the method for identifying the target values of the video frame is different from the method for identifying the target values of a video frame following the video frame.

12. The method of claim 1, **characterized in that** the step of identifying the first target value and the second target value comprises:
dynamically setting the first target value and the second target value according to user commands.

13. The method of claim 1, **characterized in that** the method further comprises setting a threshold between the first and second target values; and the step of separately adjusting the display characteristic of the pixels comprises:
separately adjusting luminance values of pixels each having a luminance value between the first target value and the threshold and luminance values of pixels each having a luminance value between the threshold and the second target value in the video frame.

14. The method of claim 14, **characterized in that** the step of separately adjusting the luminance values comprises:
lowering the luminance values of the pixels each having a luminance value lower than the threshold; and
raising the luminance values of the pixels each having a luminance value higher than the threshold.

15. The method of claim 1, **characterized in that** the pixels corresponding to the first target value are pixels each having a luminance value between the first target value and a first threshold, and the pixels corresponding to the second target value are pixels each having a luminance value between the second target value and a second threshold.

16. The method of claim 15, **characterized in that** adjusting the display characteristic of the pixels comprises:
selecting a third threshold between the first and second thresholds;
lowering luminance values of pixels corresponding to the first target value and each having a luminance value between the first threshold and the third threshold; and
raising luminance values of pixels corresponding to the second target value and each having a luminance value between the third threshold and the second threshold.

17. The method of claim 1, **characterized in that** adjusting the display characteristic of the pixels comprises changing luminance values, chrominance values, color values, or a combination of values of the pixels.

18. An adjusting device (100) for adjusting display characteristic of a video frame according to luminance statistics corresponding to a plurality of pixels in the video frame, the adjusting device (100) comprising:
a video buffer (105), for receiving the video frame;
**characterized by**:
an identifying unit (110), coupled to the video buffer (105), for identifying a first target value and a second target value from the luminance statistics; and
an adjusting unit (130), coupled to the video buffer (105), for separately adjusting the display characteristic of the pixels corresponding to the first target value and the second target value in the video frame.

19. The adjusting device (100) of claim 18, **characterized in that** the adjusting device (100) further comprises a storage unit (140) coupled to the identifying unit (110) for storing at least a predetermined selection rule (150); and the identifying unit (110) selects a specific luminance value from the luminance statistics as the first target value according to the predetermined selection rule (150) and utilizes a predetermined luminance value from the luminance statistics as the second target value.

20. The adjusting device (100) of claim 18, **characterized in that** the adjusting device (100) further comprises a storage unit (140) storing a plurality of predetermined selection rules (150); and the identifying unit (110) selects a first specific value and a second specific value from the luminance statistics as the first target value and the second target value according to the predetermined selection rules (150).

21. The adjusting device (100) of claim 18, **characterized in that** the identifying unit (110) utilizes a first predetermined luminance value and a second predetermined luminance value from the luminance statistics as the first target value and the second target value.

22. The adjusting device (100) of claim 18, **characterized in that** the identifying unit (110) dynamically sets the first target value and the second target value according to user commands.

23. The adjusting device (100) of claim 18, **characterized in that** the adjusting unit (130) changes luminance values, chrominance values, color values, or a combination of values of the pixels to separately adjust the display characteristic of the pixels.

24. A system for adjusting display characteristic of a video frame according to luminance statistics corresponding to pixels of the video frame, the system comprising:
a display (400), showing the video frame;
**characterized by**:
a dark region controller, operative to adjust the display characteristic of pixels in the video frame corresponding to a first target value; and
a bright region controller, operative to adjust the display characteristic of pixels in the video frame corresponding to a second target value;
wherein the first target value and the second target value are luminance values from the luminance statistics.

25. The system of claim 24, **characterized in that** the first target value is a specific luminance value selected from the luminance statistics according to a predetermined selection rule (150).

26. The system of claim 24, **characterized in that** the display characteristic comprises a luminance value, a chrominance value, or both.

27. The system of claim 24, **characterized in that** the dark region controller adjusts luminance values between the first target value and a first threshold, and the bright region controller adjusts luminance values between the second target value and a second threshold.
